# EUROPÄISCHE PATENTSCHRIFT

(11) **EP 1 918 621 B1**
(45) Veröffentlichungstag und Bekanntmachung des Hinweises auf die Patenterteilung: **18.02.2009**
(21) Anmeldenummer: 06022995.2
(22) Anmeldetag: 06.11.2006
(51) Int. Cl.: F16K 17/38

(54) **Sicherheitsventil für einen Druckgasbehälter**
Safety valve for a pressure gas container
Soupape de sûreté pour une réservoir de gaz sous pression

(43) Veröffentlichungstag der Anmeldung: 07.05.2008
(73) Patentinhaber: Job Lizenz GmbH, 22926 Ahrensburg (DE)
(72) Erfinder: Job, Eduard J., 22926 Ahrensburg (DE)
(74) Vertreter: von Eichel-Streiber, Caspar

(56) Entgegenhaltungen:
- EP-A- 0 960 634
- EP-A- 1 748 237
- US-A- 5 511 576

## Beschreibung

Die Erfindung betrifft ein Sicherheitsventil für einen Druckgasbehälter gemäß dem Oberbegriff des Anspruches 1.

Ein solches Sicherheitsventil ist in der EP 960 634 A2 offenbart. In der in der Fig. 4 dieser Druckschrift gezeiten Ausgestaltungsvariante greift ein elastisches Element an der als Dichtelement für den Überströmkanal verwendeten Berstscheibe an, um thermisch bedingte Längenveränderungen des Berstkörpers zu kompensieren.

In der nachveröffentlichten EP 1 748 237 A1 ist in verschiedenen Varianten ein vergleichbares Sicherheitsventil offenbart, ohne dass hier ein Federelement etwa an einem Verschlusskörper angriffe.

In der US5,511,576 schließlich ist ein thermisch auslösendes Sicherheitsventil offenbart, dessen thermische Auslöseeinheit anstelle eines Berstkörpers ein Schmelzlot enthält. Die Kraft einer Feder muss hier das im Auslösefall geschmolzene Lot durch einen porösen Stopfen, z.B. aus einem Sintermetall, drücken, um ein Auslösen überhaupt zu ermöglichen.

Ein anderes und insbesondere ohne wie im Oberbegriff des Patentanspruchs 1 offenbartes Federelement gebildetes Sicherheitsventil ist in der Patentschrift DE 199 11 530 C2 offenbart.

Nach den technischen Regeln für Druckgase, z.B. TTRG381, müssen Druckgasbehälter mit einer Schmelzsicherung oder einer gleichwirkenden Sicherung ausgerüstet sein, um im Brandfall Drucküberschreitungen und damit ein Bersten des Behälters sicher zu verhindern.

Dies gilt beispielsweise auch für in Kraftfahrzeugen angeordnete Druckgasbehälter zur Aufnahme von z.B. Erdgas, Wasserstoff oder anderer brennbaren Gasen als Treibstoff.

Die aus der oben genannten DE 199 11 530 C2 vorbekannte Variante eines solchen Sicherheitsventils enthält einen Verschlusskörper, der sich in einer Bereitschaftsposition direkt auf dem Metall eines Gehäuses abstützt, in welchem ein Überstromkanal gebildet ist. Unmittelbar auf dem Verschlusskörper selbst stützt sich dann wiederum der Berstkörper ab, der in diesem Beispiel eine Glasampulle ist. Nach der in der oben genannten Druckschrift offenbarten Lehre ist die Glasampulle letztlich zwischen zwei starr verbundene Auflagen eingespannt. Die Unterschiede zwischen den thermischen Ausdehnungskoeffizienten des Metalls, aus dem der Verschlusskörper sowie das Gehäuse gebildet sind, und des Glasmaterials des Berstkörpers führen bei dieser Anordnung dazu, dass bei Abkühlung bzw. Erwärmung die Gefahr besteht, dass der Berstkörper zerbricht, weil beispielsweise sich das Metall des Verschlusskörpers und des Gehäuses stärker ausdehnt bzw. zusammenzieht als das Glasmaterial des Berstkörpers und diesen somit, insbesondere bei Abkühlung zerdrückt. Das Problem unterschiedlicher Temperaturen und damit unterschiedlicher Ausdehnungen der genannten Materialien tritt insbesondere bei in Kraftfahrzeugen angeordneten Druckgasbehältern bzw. den daran angeordneten Sicherheitsventilen auf. Kraftfahrzeuge sind, insbesondere wenn sie im Freien geparkt oder abgestellt werden, Temperaturen von bis zu -50°C im Winter bis hin zu 50°C und mehr (sofern sie in der prallen Sonne stehen) im Sommer ausgesetzt, wobei beim Füllvorgang des Druckgasbehälters die genannten Umgebungstemperaturen sogar noch weit unterschritten werden können. Aufgrund dieser weiten Temperaturspanne von 100°C und mehr machen sich die unterschiedlichen thermischen Ausdehnungskoeffizienten von Metall und Glas deutlich bemerkbar. Es kann mit anderen Worten zu einem unbeabsichtigten Auslösen des Sicherheitsventils und einem Ausströmen des in dem Druckgasbehälter befindlichen Gases kommen. Gleiche Überlegungen hinsichtlich der thermischen Ausdehnungskoeffizienten gelten aber auch für andere Druckgasbehälter bzw. für die darin angeordneten Sicherheitsventile, die hohen Temperaturschwankungen ausgesetzt sind.

Das Problem der unterschiedlichen thermischen Ausdehnungskoeffizienten zwischen dem Material des Berstelementes und dem des Ventilgehäuses ist in der o.g. Europäischen Patentanmeldung bereits angenommen und zufrieden stellend gelöst worden. Dort ist nämlich in die Konstruktion ein Federelement eingeführt worden, welches eine in Richtung des Widerlagers gerichtete Federkraft auf das Berstelement ausübt und so mechanische Längenveränderungen abpuffern kann.

Allerdings gibt es insbesondere bei den o.g. Druckgasbehältern für Kraftfahrzeugtreibstoff, aber auch bei anderen Druckgasbehältern, die unter einem hohen Druck stehen, ein weiteres Problem. Ein zuverlässiges Auslösen des Sicherheitsventils muss nicht nur bei einem vollständig gefüllten, sondern auch bei einem nahezu geleerten Druckgasbehälter gewährleistet sein, der in dem letztgenannten Zustand noch einen Restdruck von z.B. "nur" 7 bar oder sogar weniger aufweisen kann. Da die Ventile auch Gegendrücken von im Betrieb z.B. etwa 300 bar bei einer Befüllung des Druckgasbehälters mit Erdgas bzw. 700 bar bei einer Befüllung des Druckgasbehälters mit Wasserstoff und zu Prüfzwecken kurzzeitig sogar dem dreifachen Wert standhalten müssen, wird die Querschnittsfläche des Verschlusskörpers entsprechend klein gewählt. Dennoch lasten bei einem Durchmesser des Verschlusskörpers von 3 mm und einem Betriebsdruck von 700 bar etwa 500 N auf dem Verschlusskörper, bei einem Durchmesser von 6 mm und einem Betriebsdruck von 300 bar sind dies sogar etwa 850 N. Diesen Kräften (unter extremen Prüfbedingungen auch den dreifachen Werten) müssen die Ventile standhalten, so dass als Dichtelemente praktisch ausschließlich O-Ringe verwendet werden können.

Bei vollem Beladungsdruck genügt die an dem Verschlusskörper anliegende Kraft dann auch, bei einem geborstenen Berstkörper den Verschlusskörper sicher aus der Bereitschaftsposition in die Freigabeposition zu verschieben. Ist jedoch der Druck in dem Druckgasbehälter z.B. auf nur noch 7 bar abgesunken, so beträgt die Kraft auf dem Verschlusskörper bei einem Durchmesser von 3 mm nur noch etwa 5 N. Es besteht hier das Risiko, dass diese Kraft nicht genügt, ein sicheres Auslösen des Sicherheitsventils zu gewährleisten, insbesondere dann, wenn das Dichtelement, vornehmlich ein O-Ring, mit den beteiligten Dichtflächen nach längerer Betriebszeit verklebt.

Aufgabe der vorliegenden Erfindung ist es daher, ein Sicherheitsventil für Druckgasbehälter der eingangs genannten Art dahingehend weiterzubilden, dass ein sicheres Auslösen auch bei niedrigen Drücken in dem Druckgasbehälter gewährleistet ist.

Diese Aufgabe wird gelöst durch ein Sicherheitsventil mit den Merkmalen des Patentanspruchs 1.

Vorteilhafte Weiterbildungen der Erfindung sind in den abhängigen Ansprüchen 2 bis 7 angegeben.

Das wesentliche Merkmal der Erfindung besteht - im Unterschied zu der als nachveröffentlichtem Stand der Technik angeführten Lehre der EP 1 748 237 A1 wie auch zu der Lehre der EP 960 634 A2 - darin, dass das Federelement nicht mehr allein dem Ausgleich unterschiedlicher thermischer Ausdehnung dient, sondern zugleich in einem Auslösefall, d.h. beim Bersten des Berstelementes, ein Verschieben des Verschlusskörpers und damit eine Freigabe des Überströmkanals mit einer Auslösekraft von wenigstens 10 N aktiv unterstützt. Dies ist von besonderer Bedeutung, wenn z.B. im Falle eines Brandes eines Kraftfahrzeuges mit einem Druckgasbehälter als Kraftstofftank dieser Druckgasbehälter nur noch mit einem vergleichsweise geringen Druck befüllt ist. Die reinen von dem Druckgas in dem Druckgasbehälter auf den Verschlusskörper ausgeübten Kräfte können dann, wie oben dargelegt, nur einige wenige Newton betragen und eine sichere Auslösung des Sicherheitsventils, d.h. ein sicheres Verschieben des Verschlusskörpers nicht mehr in jedem Fall sicherstellen. Da aber z.B. ein mit einem brennbaren Gas mit 7 bar gefüllter Druckgasbehälter bei einer Explosion durchaus noch eine erhebliche Zerstörungswirkung entfalten kann, ist ein sicheres Auslösen des Sicherheitsventils von wesentlicher Bedeutung. Hier hilft nun das erfindungsgemäß auf einen Verschlusskörper angreifende Federelement, welches durch die Wahl seiner Auslegung mit einer bestimmten Auslösekraft, vorzugsweise einer Kraft von größer oder gleich 20 N (vgl. Anspruch 2), ausgelegt werden kann. Mit anderen Worten wird so sichergestellt, dass eine Mindestauslösekraft des Sicherheitsventils gegeben ist, unabhängig von einem Restfülldruck des Druckgasbehälters. Diese Mindestauslösekraft ist dabei so gewählt, dass eventuelle durch mögliches Verkleben oder Verklemmen eines Dichtelementes entstehende Gegenkräfte oder auch die einfachen Reibkräfte dieses Dichtelementes sicher überwunden werden können und das Verschlusselement zuverlässig ausgelöst werden kann.

Das erfindungsgemäße Sicherheitsventil kann im Rahmen der Erfindung zur Anbringung unmittelbar an einem Druckgasbehälter, aber auch an einer mit diesem Behälter verbundenen Leitung vorgesehen sein.

Gemäß einer vorteilhaften Weiterbildung ist vorgesehen, dass das Federelement einerseits an dem Verschlusskörper, andererseits an einem den Überströmkanal und den Ablasskanal umfassenden Ventilgehäuse abgestützt ist und dass die Abstützung an dem Ventilgehäuse einspannungsfrei ausgestaltet ist (Anspruch 3). "Einspannungsfrei" bedeutet in diesem Zusammenhang, dass das Federelement mit seinem an dem Ventilgehäuse abgestützten Ende sich von diesem frei lösen und relativ zu dem Ventilgehäuse bewegen kann. Dies bedingt den erheblichen Vorteil, dass ein Federelement einem Öffnungsweg des Verschlusskörpers folgen und auf diese Weise die Auslösekraft besonders gut auf den Verschlusskörper übertragen kann.

Mögliche Federelemente sind eine Schraubenfeder, wie sie in Anspruch 4 näher gekennzeichnet ist bzw. eine Tellerfeder gemäß den Merkmalen des Anspruches 5.

In der Regel wird zu Abdichtung des Verschlusskörpers gegenüber dem Überströmkanal ein O-Ring gewählt (vgl. Anspruch 6), da dieser bei den zu erwartenden Druck- und Kräfteverhältnissen in dem Druckgasbehälter das günstigste und zuverlässigste Dichtmittel darstellt. Selbstverständlich sind aber auch andere Dichtmethoden, wie z.B. Lippendichtungen, möglich.

Als Berstkörper wird bevorzugt eine Glasampulle verwendet, da diese ein Berstelement darstellt, welches schnell, temperaturgenau und zuverlässig auslöst (Anspruch 7).

Weitere Vorteile und Merkmale des erfindungsgemäßen Sicherheitsventils ergeben sich aus der nachfolgenden Beschreibung der in den beigefügten Figuren dargestellten Ausführungsbeispiele. Dabei zeigen:
- Fig. 1: eine erste Ausgestaltung eines erfindungsgemäßen Sicherheitsventils in einer Schnittdarstellung;
- Fig. 2: in einer Fig. 1 vergleichbaren Schnittdarstellung eine zweite Ausführungsvariante des erfindungsgemäßen Sicherheitsventils;
- Fig. 3: ebenfalls in einer Schnittdarstellung eine dritte Ausführungsvariante des erfindungsgemäßen Sicherheitsventils;
- Fig. 4: eine vierte Ausführungsvariante eines erfindungsgemäßen Sicherheitsventils; und
- Fig. 5: eine fünfte Variante eines erfindungsgemäßen Sicherheitsventils im Schnitt.

Die Figuren sind schematisch und nicht maßstabsgerecht. In den Figuren sind gleiche bzw. gleichartige Elemente mit gleichen bzw. gleichartig gebildeten Bezugszeichen versehen.

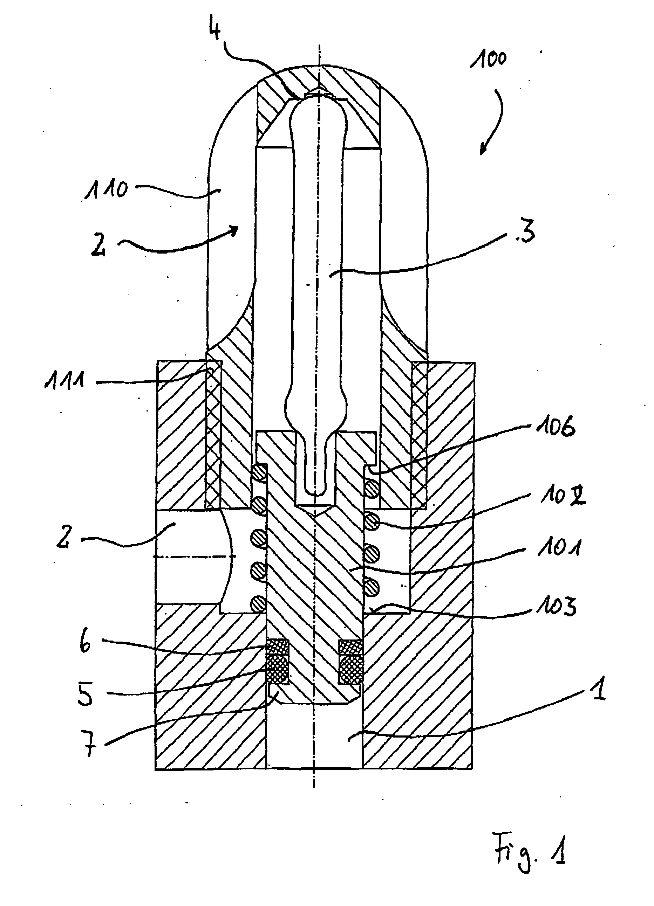

In den Figuren 1 bis 5 sind fünf unterschiedlich gestaltete Ausführungsvarianten für ein erfindungsgemäßes Sicherheitsventil gezeigt und dort mit 100, 200, 300, 400 bzw. 500 bezeichnet.

Allen gezeigten Ausführungsvarianten gemein ist, dass diese einen Überströmkanal 1 aufweisen, der im Betrieb mit dem Innenraum eines Druckgasbehälters (nicht gezeigt) verbunden ist. Ferner weisen alle gezeigten Ausführungsvarianten mindestens einen Ablasskanal 2 auf, der bei ausgelöstem, d.h. geöffnetem Sicherheitsventil mit dem Überströmkanal 1 verbunden ist und
über den dann das aus dem Druckgasbehälter ausströmende Gas abströmt. Ferner weisen sämtliche Varianten des Sicherheitsventils einen Verschlusskörper auf, der in den Ausführungsbeispielen mit 101, 201, 301, 401 bzw. 501 bezeichnet ist, der in einer Bereitschaftsposition den Überströmkanal 1 verschließt und in dieser Bereitschaftsposition durch eine zwischen dem Verschlusskörper und einem Widerlager 4 eingespannte, flüssigkeitsgefüllte Glasampulle 3 gehalten wird. Die flüssigkeitsgefüllte Glasampulle 3 nimmt dabei die auf dem Verschlusskörper 101, 201, 301, 401 b2w. 501 durch das in dem Überströmkanal 1 anstehende Druckgas lastenden Kräfte auf.

Zum Abdichten des Überströmkanals 1 in der Bereitschaftsposition weisen die Verschlusskörper in allen fünf gezeigten Ausführungsbeispielen je eine Dichtung in Form wenigstens eines O-Ringes 5 auf, der an dem Verschlusskörper durch einen Haltevorsprung 7 festgelegt ist und jedenfalls in den Ausführungsbeispielen gemäß Figuren 1 bis 4 zusätzlich durch einen Stützring 6 in seiner Position gehalten wird.

Allen Ausführungsbeispielen ist ferner gemein, dass sie ein - in den Ausführungsbeispielen unterschiedlich gestaltetes - Federelement aufweisen, welches zweierlei Funktionen ausübt:

Erstens übt das Federelement auf die Glasampulle 3 eine in Richtung des Widerlagers 4 gerichtete Vorspannung aus, die dazu dient, unterschiedliche Materialausdehnungen aufgrund von Temperaturschwankungen aufzufangen und Kräfte, die sonst mechanische Spannungen auf die Glasampulle 3 ausüben würden, aufzunehmen. Zweitens dient das Federelement dazu, eine Vorspannung auf den Verschlusskörper in eine Öffnungsrichtung, d.h. auf das Widerlager 4 zu, auszuüben. Dies wird nachfolgend anhand der Beschreibung jedes der einzelnen Ausführungsbeispiele noch einmal deutlich.

Bei dem in Fig. 1 gezeigten Ausführungsbeispiel ist der Verschlusskörper 101 unmittelbar in einen z.B. in einer Ventilarmatur ausgebildeten Überströmkanal 1 eingesetzt, die Glasampulle 3 ist mittels einer das Widerlager 4 enthaltenden Haube 110 über eine Verschraubung 111 in die ventilarmatur eingesetzt, um so das Sicherheitsventil 100 zu bilden.

Der Verschlusskörper 101 ist in diesem Ausführungsbeispiel mittels einer Schraubenfeder 102 vorgespannt. Hierzu ist der Verschlusskörper 101 in dem Überströmkanal 1 prinzipiell frei beweglich, d.h. schwimmend angeordnet. Die Schraubenfeder 102 ist zwischen einem Vorsprung 103 in einem Übergangsbereich zwischen Überströmkanal 1 und Ablasskanal 2 aufgesetzt und liegt andererseits an einem Vorsprung 106 des Verschlusskörpers 101 an, um so eine Federkraft auf diesen aufzubringen.

Bricht nun aufgrund einer hohen Temperatur und damit verbundenen Ausdehnung der innerhalb der Glasampulle 3 befindlichen Flüssigkeit die Glasampulle 3, führt neben der von dem Gasdruck des in dem Überströmkanal 1 anstehenden Druckgases auf den Verschlusskörper 101 ausgeübten Kraft zusätzlich auch die Kraft der Feder 102 zu einer Verschiebung des Verschlusskörpers 101 in Richtung des Widerlagers 4, wodurch eine Verbindung zwischen dem Überströmkanal 1 und dem Ablasskanal 2 geöffnet wird, das in dem Druckgasbehälter befindliche Gas also über den Ablasskanal 2 abströmen kann. In diesem gezeigten Ausführungsbeispiel fährt bei einem Auslösen der Verschlusskörper 101 in das Innere der Haube 110 hinein, so dass das Gas aus dem Druckgasbehälter über einen der Ablasskanäle 2 abströmen kann.

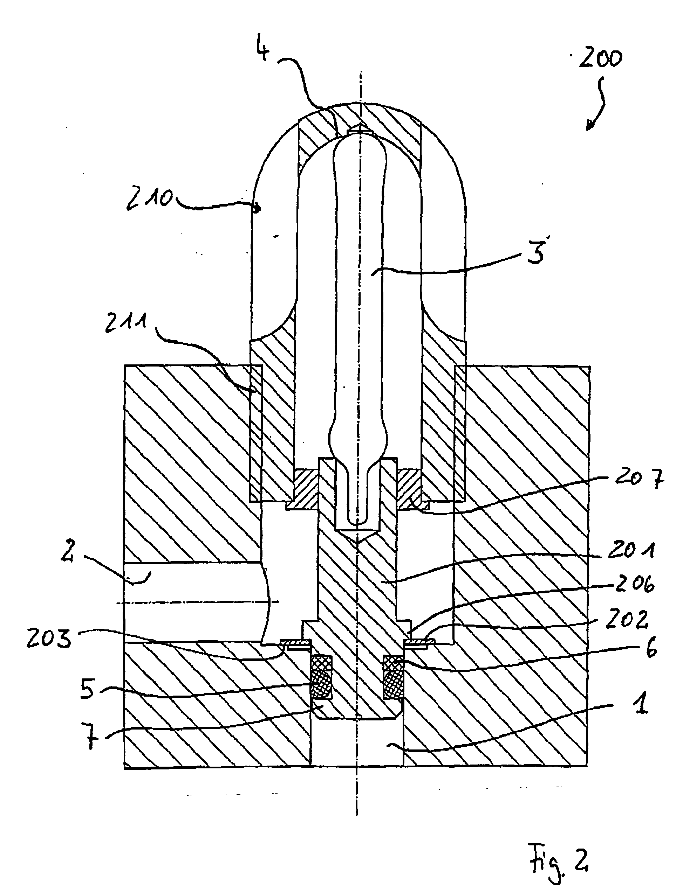

Bei dem in Fig. 2 gezeigten Ausführungsbeispiel ist als Federelement eine Tellerfeder 202 gewählt, die einerseits auf einem Vorsprung 203 im Übergangsbereich zwischen Überströmkanal 1 und Ablasskanal 2 aufliegt und andererseits an einem Vorsprung 206 des Verschlusskörpers 201 anliegt. Der Verschlusskörper 201 ist hier zusätzlich über einen in der Haube 210 mit dem Widerlager 4 eingesetzten Führungsring 207 geführt. Auch in diesem Ausführungsbeispiel ist die Haube 210 über eine Verschraubung 211 in eine eigentliche Ventilarmatur eingeschraubt, der Verschlusskörper 201 ist direkt in den Überströmkanal 1 eingesetzt. Bei einem Bersten der Glasampulle 3 in diesem Ausführungsbeispiel sorgt neben dem Gasdruck des in dem Überströmkanal 1 anstehenden Druckgases die Kraft der Tellerfeder 202 für ein sicheres Auslösen des Verschlusskörpers 201, wobei der Verschlusskörper 201 geführt in dem Führungsring 207 in die Haube 210 hinein fährt, dort in einer im wesentlichen gasdichten Position zu liegen kommt. So wird in diesem Ausführungsbeispiel bei einem Auslösen des Sicherheitsventils jedenfalls der weit überwiegende Anteil des über den Überströmkanal 1 abströmenden Druckgases über den Ablasskanal 2 weggeführt und kann von dort z.B. über eine angeschlossene Abströmleitung einem gezielten Abströmort zugeleitet werden.

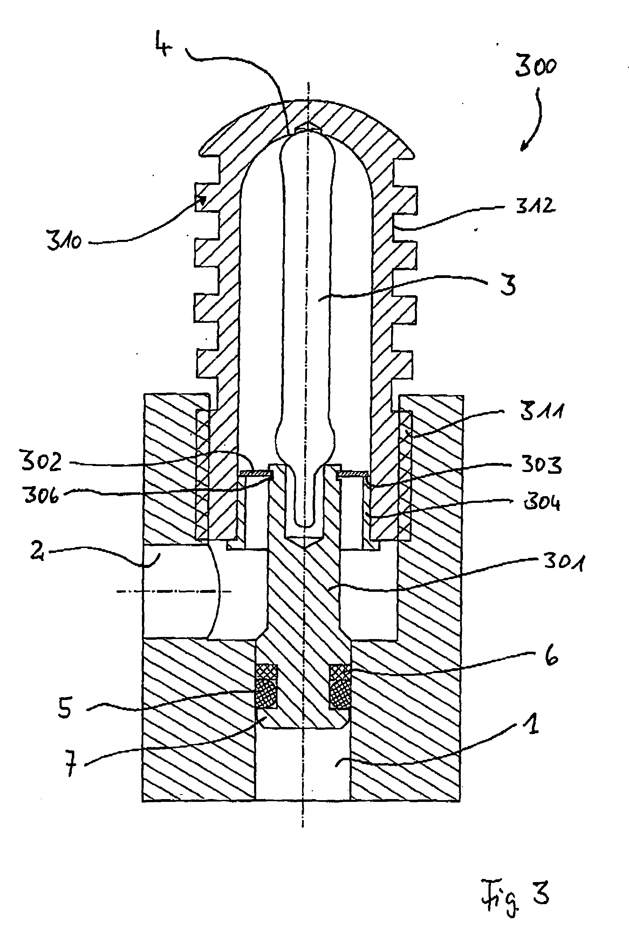

Bei dem in Fig. 3 gezeigten Ausführungsbeispiel ist das Federelement wiederum eine Tellerfeder 302. Diese liegt nunmehr auf einem Vorsprung 303, der durch eine Stirnfläche einer in die Haube 310 eingesetzten Hülse 304 gebildet ist, auf und ist andererseits in einer Ringnut 306 in dem Verschlusskörper 301 festgelegt. Auch hier führt bei einem Bersten der Glasampulle 3 neben dem Druck des in dem Überströmkanal 1 anstehenden Druckgases eine Vorspannung der Tellerfeder 302 zu einem Verschieben des Verschlusskörpers 301 in Richtung auf das Widerlager 4 zu. Dabei fährt die Tellerfeder 302 mit dem Verschlusskörper 301 mit, da sie mit diesem ja über die Passung in der Ringnut 306 verbunden ist. Auch in diesem Ausführungsbeispiel ist der Weg des Druckgases nach einem Auslösen des Sicherheitsventils über den Überströmkanal in den Ablasskanal vorgegeben, da hier die Haube 310 anders als die vorherigen Beispiele keine Schlitze zur Einleitung der Temperatur in das Innere der Haube aufweist, sondern geschlossen ist. Hier sind für eine bessere Wärmeaufnahme stattdessen Kerben 312 bzw. Rillen in die Haube 310 eingebracht.

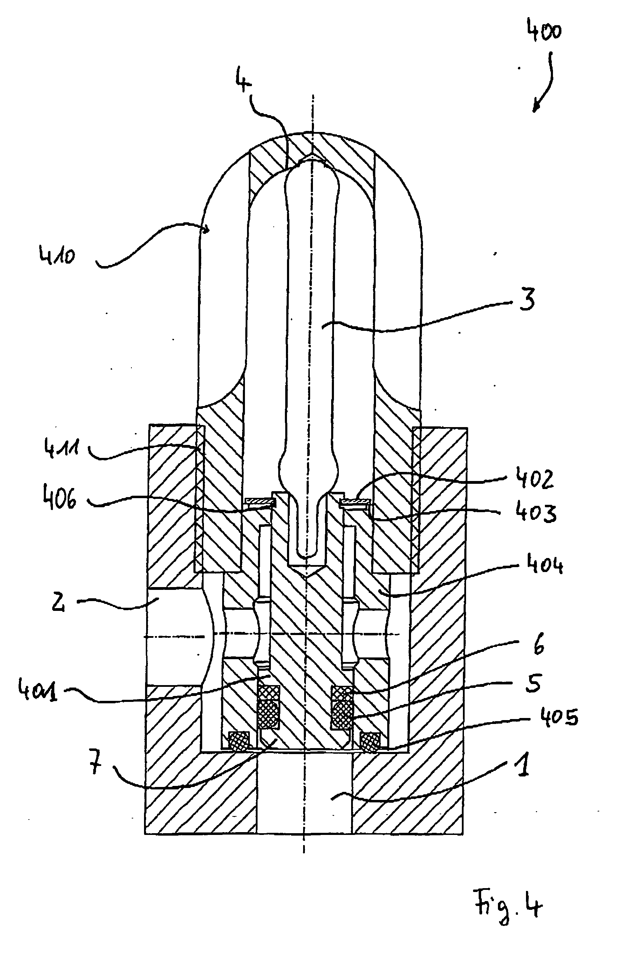

Bei dem in Fig. 4 dargestellten Ausführungsbeispiel ist das Federelement wiederum eine Tellerfeder 402, die einerseits auf einem Absatz 403 aufliegt, der durch eine Stirnfläche eines Zwischenstückes 404 gebildet ist, andererseits in einer in dem Verschlusskörper 401 gebildeten Ringnut 406 festliegt.

Das in diesem Ausführungsbeispiel zusätzlich vorhandene Zwischenstück 404 dient dazu, zusammen mit dem Verschlusskörper 402, der Haube 410 eine kompakte Baueinheit zu bilden, die über die Verschraubung 411 in eine bestehende Ventilarmatur eingeschraubt werden kann. Dies erleichtert insbesondere eine Montage. Wo insbesondere bei den Figuren 1 und 2 gezeigten Ausführungsbeispielen der Verschlusskörper separat in den Überströmkanal eingesetzt und hernach zur Einbringung der Glasampulle mittels der Haube festgelegt werden muss, ist hier lediglich eine gemeinsame Baueinheit anzubringen. Um ein Ausströmen von Druckgas aus dem Überströmkanal 1 in den Ablasskanal 2 bereits in der Bereitschaftsposition zu verhindern, ist eine zusätzliche Abdichtung zwischen dem Zwischenstück 404 und einem Übergangsbereich zwischen dem Überströmkanal 1 und dem Ablasskanal 2 mittels des O-Ringes 405 gewährleistet. Auch in diesem Ausführungsbeispiel unterstützt die Federkraft der Tellerfeder 402 bei einem Bersten der Glasampulle 3 ein Auslösen des Verschlusskörpers 401.

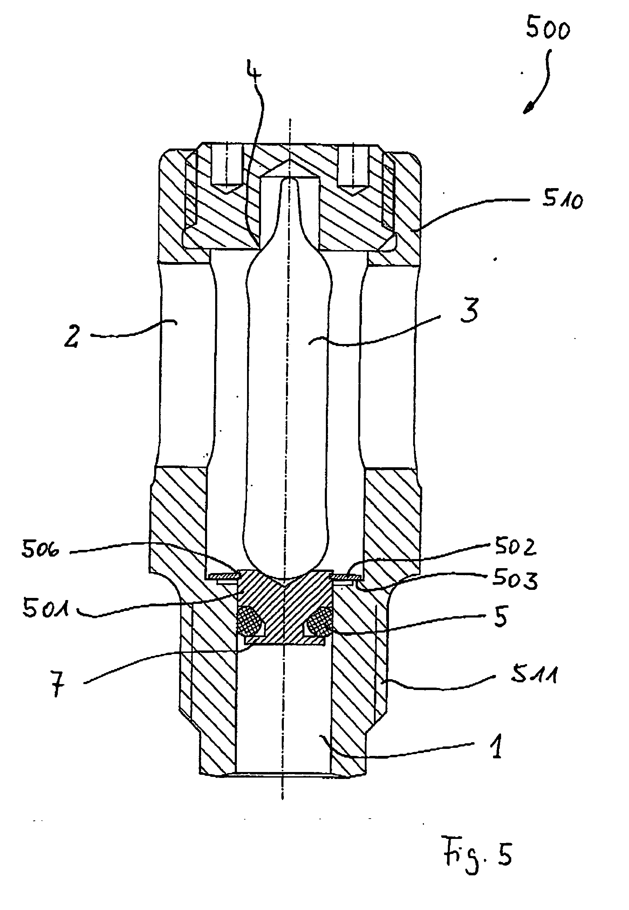

Ähnliches gilt schließlich für das in Fig. 5 gezeigte Ausführungsbeispiel. Hier ist lediglich ein in eine Ventilarmatur einzuschraubender Ventilbausatz dargestellt, der für eine Verbindung mit der Ventilarmatur ein Außengewinde 511 aufweist und von einem Gehäusestück 510 umschlossen wird. Auch hier liegt eine Tellerfeder 502 als Federelement auf einem innerhalb des Gehäusestückes 510 gebildeten Vorsprung 503 auf, und ist andererseits in einer Ringnut 506 des Verschlusskörpers 501 eingesetzt. Das Widerlager 4 ist in einem Passstück in das Gehäusestück 510 eingeschraubt. Dies dient lediglich Montagezwecken, da über diesen im fertigen Zustand verschraubten Zugang der Verschlusskörper 501 mit o-Ring 5 und Tellerfeder 502 sowie die Glasampulle 3 in das Gehäusestück 510 eingesetzt wird.

Die Tellerfeder 502 unterstützt auch in diesem Ausführungsbeispiel bei einem Bersten der Glasampulle 3 ein Auslösen bzw. Verschieben des Verschlusskörpers 501. Anders als in den vorherigen Beispielen ist hier der Ablasskanal 2 nicht ein innerhalb einer Armatur liegender, definierter Kanal, sondern einfach durch eine Öffnung in dem Gehäusestück 50 gebildet.

Allen gezeigten Ausführungsbeispielen ist gemein, dass sie ein Federelement (Schraubenfeder 102, Tellerfedern 202, 302, 402 und 502) aufweisen, welches an dem jeweiligen Verschlusskörper zwar festgelegt sein kann, jedoch gegenüber einem umgebenden Gehäuse oder vergleichbaren Element frei beweglich ist. Die jeweiligen Federelemente üben in der Bereitschaftsposition auf den jeweiligen Verschlusskörper eine in Richtung des Widerlagers 4 gerichtete Kraft aus, die ausreichend groß ist, um auch bei einem äußerst niedrigen Gasdruck in dem Überstromkanal 1 den Verschlusskörper 1 entgegen möglicher aufgrund des Anliegens des O-Ringes 5 an der Wandung des Überströmkanals 1 bestehender Haft- bzw. Reibkräfte aus der Bereitschaftsposition, in welcher er den Überströmkanal 1 verschließt, in eine Freigabeposition zu bewegen. Damit ist in jedem Fall sichergestellt, dass bei einer hohen Temperatur und einer entsprechend gebrochenen Glasampulle 3 das erfindungsgemäße Sicherheitsventil zuverlässig auslöst.

Die in den Figuren gezeigten und vorstehend beschriebenen Ausführungsbeispiele dienen lediglich der Erläuterung und sollen die Erfindung, wie sie in den nachfolgenden Ansprüchen gekennzeichnet ist, nicht beschränken.

### Bezugszeichenliste

| | | | |
|---|---|---|---|
| 1 | Überströmkanal | 2 | Ablasskanal |
| 3 | Glasampulle | 4 | Widerlager |
| 5 | O-Ring | 6 | Stützring |
| 7 | Haltvorsprung | | |
| | | | |
| 100 | Sicherheitsventil | 101 | Verschlusskörper |
| 102 | Schraubenfeder | 103 | Vorsprung |
| 106 | Vorsprung | 110 | Haube |
| 111 | Schraubverbindung | | |
| | | | |
| 200 | Sicherheitsventil | 201 | Verschlusskörper |
| 202 | Tellerfeder | 203 | Vorsprung |
| 206 | Vorsprung | 207 | Führungsring |
| 210 | Haube | 211 | Schraubverbindung |
| | | | |
| 300 | Sicherheitsventil | 301 | Verschlusskörper |
| 302 | Tellerfeder | 303 | Vorsprung |
| 304 | Hülse | 306 | Ringnut |
| 310 | Haube | 311 | Schraubverbindung |
| 312 | Kerbe | | |
| | | | |
| 400 | Sicherheitsventil | 401 | Verschlusskörper |
| 402 | Tellerfeder | 403 | Vorsprung |
| 404 | Zwischenstück | 405 | O-Ring |
| 406 | Ringnut | 410 | Haube |
| 411 | Schraubverbindung | | |
| | | | |
| 500 | Sicherheitsventil | 501 | Veschlusskörper |
| 502 | Tellerfeder | 503 | Vorsprung |
| 506 | Ringnut | 510 | Gehäusestück |
| 511 | Gewinde | | |

## Patentansprüche

1. Sicherheitsventil für einen Druckgasbehälter mit einem mit dem Druckgasbehälter verbindbaren Überströmkanal (1) sowie wenigstens einem Ablasskanal (2) und mit einer thermischen Auslöseeinheit (3, 101, 102; 201, 202; 301, 302; 401, 402; 501, 502), welche einen aus einer Bereitschaftsposition, in welcher sie in Zusammenwirkung mit einem Dichtelement (5) den Überströmkanal (1) gegenüber dem wenigstens einen Ablasskanal (2) dicht verschlossen hält, in eine Freigabeposition, in welcher der Überströmkanal (1) mit dem Ablasskanal (2) verbunden ist, verlagerbaren Verschlusskörper (101; 201; 301; 401; 501) und einen Berstkörper (3), welcher zwischen einem Widerlager (4) und dem Verschlusskörper (101; 201; 301; 401; 501) angeordnet ist, um letzteren in der Bereitschaftsposition zu halten, aufweist, wobei die thermische Auslöseeinheit (3, 101, 102; 201, 202; 301, 302; 401, 402; 501, 502) ein Federelement (102; 202; 302; 402; 502) enthält, welches auf den Berstkörper (3) eine in Richtung des Widerlagers (4) gerichtete Federkraft ausübt, wobei das Federelement (102; 202; 302; 402; 502) an dem Verschlusskörper (101; 201; 301; 401; 501) angreift, um auf diesen eine in eine Auslöserichtung wirkende Federkraft auszuüben, **dadurch gekennzeichnet, dass** das Federelement in der Bereitschaftsposition eine Auslösekraft von größer oder gleich 10 N auf den Verschlusskörper aufbringt.

2. Sicherheitsventil nach Anspruch 1, **dadurch gekennzeichnet, dass** das Federelement in der Bereitschaftsposition eine Auslösekraft von größer oder gleich 20 N auf den Verschlusskörper aufbringt.

3. Sicherheitsventil nach einem der vorhergehenden Ansprüche, **dadurch gekennzeichnet, dass** das Federelement (102; 202; 302; 402; 502) einerseits an dem Verschlusskörper(101; 201; 301; 401; 501), andererseits an einem den Überströmkanal (1) und den Ablasskanal (2) umfassenden Ventilgehäuse abgestützt ist, wobei die Abstützung an dem Ventilgehäuse einspannungsfrei ausgestaltet ist.

4. Sicherheitsventil nach einem der vorhergehenden Ansprüche, **dadurch gekennzeichnet, dass** das Federelement eine an dem Verschlusskörper (101) einerseits und an einem Abschnitt eines den Überströmkanal (1) und den Ablasskanal (2) aufweisenden Ventilgehäuses andererseits anliegende Schraubenfeder (102) ist.

5. Sicherheitsventil nach einem der Ansprüche 1 bis 3, **dadurch gekennzeichnet, dass** das Federelement wenigstens eine an dem Verschlusskörper (201; 301; 401; 501) einerseits und an einem Abschnitt eines den Überströmkanal (1) und den Ablasskanal (2) aufweisenden Ventilgehäuses andererseits anliegende Tellerfeder (202; 302; 402; 502) ist.

6. Sicherheitsventil nach einem der vorhergehenden Ansprüche, **dadurch gekennzeichnet, dass** das Dichtelement (5) ein an dem Verschlusskörper anliegender, den Überstromkanal (1) in der Bereitschaftsposition abdichtender O-Ring ist.

7. Sicherheitsventil nach einem der vorhergehenden Ansprüche, **dadurch gekennzeichnet, dass** der Berstkörper (3) eine axial zwischen dem Verschlusskörper und dem Widerlager (4) eingespannte, flüssigkeitsgefüllte Glasampulle ist.

## Claims

1. Safety valve for a pressure gas container having an overflow channel (1) connectable to the pressure gas container, as well as at least one discharge channel (2) and with a thermal tripping unit (3, 101, 102; 201, 202; 301, 302; 401, 402; 501, 502), which has a closure member (101; 201; 301; 401; 501) displaceable from a standby position in which it, in conjunction with a sealing element (5), keeps the overflow channel (1) tightly closed with respect to the at least one discharge channel (2) into a release position, in which the overflow channel (1) is connected to the discharge channel (2), and a rupture member (3), which is positioned between an abutment (4) and the closure member (101; 201; 301; 401; 501), in order to keep the latter in the standby position, the thermal tripping unit (3, 101, 102; 201, 202; 301, 302; 401, 402; 501, 502) containing a spring element (102; 202; 302; 402; 502), which exerts on the rupture member (3) a spring tension directed towards the abutment (4), the spring element (102; 202; 302; 402; 502) engaging on the closure member (101; 201; 301; 401; 501) in order to exert thereon a spring tension acting in a tripping direction, **characterized in that,** in the standby position, the spring element applies a tripping force equal to or higher than 10 N on the closure member.

2. Safety valve according to claim 1, **characterized in that**, in the standby position, the spring element exerts a tripping force equal to or greater than 20 N on the closure member.

3. Safety valve according to one of the preceding claims, **characterized in that** the spring element (102; 202; 302; 402; 502) is supported on the one hand on the closure member (101; 201; 301; 401; 501) and on the other on a valve housing embracing the overflow channel (1) and discharge channel (2), the support on the valve housing being in restraint-free form.

4. Safety valve according to one of the preceding claims, **characterized in that** the spring element is a helical spring (102) engaging on the one hand on the closure member (101) and on the other on a portion of a valve housing having the overflow channel (1) and discharge channel (2).

5. Safety valve according to one of the claims 1 to 3, **characterized in that** the spring element is at least one cup spring (202; 302; 402; 502) engaging on the one hand on the closure member (201; 301; 401; 501) and on the other on a portion of a valve housing having the overflow channel (1) and discharge channel (2).

6. Safety valve according to one of the preceding claims, **characterized in that** the sealing element (5) is an O-ring engaging on the closure member and sealing the overflow channel (1) in the standby position.

7. Safety valve according to one of the preceding claims, **characterized in that** the rupture member (3) is a liquid-filled glass ampoule axially fixed between the closure member and the abutment (4).

## Revendications

1. Soupape de sûreté pour un réservoir de gaz sous pression avec un canal de transfert (1) pouvant être relié au réservoir de gaz sous pression ainsi qu'au moins un canal d'évacuation (2) et avec une unité de déclenchement (3, 101, 102 ; 201, 202 ; 301, 302 ; 401, 402 ; 501, 502) thermique qui présente un corps de fermeture (101 ; 201 ; 301 ; 401 ; 501) déplaçable d'une position d'attente, dans laquelle il maintient fermé de manière étanche en coopération avec un élément étanche (5) le canal de transfert (1) par rapport à l'au moins un canal d'évacuation (2), à une position de libération, dans laquelle le canal de transfert (1) est relié au canal d'évacuation (2), et un corps d'éclatement (3) qui est disposé entre un contre-appui (4) et le corps de fermeture (101 ; 201 ; 301 ; 401 ; 501) afin de maintenir ce dernier en position d'attente, l'unité de déclenchement (3, 101, 102 ; 201, 202 ; 301, 302 ; 401, 402 ; 501, 502) thermique contenant un élément de ressort (102 ; 202 ; 302 ; 402 ; 502) qui exerce sur le corps d'éclatement (3) une force de ressort dirigée en direction du contre-appui (4), l'élément de ressort (102 ; 202 ; 302 ; 402 ; 502) engageant le corps de fermeture (101 ; 201 ; 301 ; 401 ; 501) afin d'exercer sur celui-ci une force de ressort agissant dans un sens de déclenchement, **caractérisée en ce que** l'élément de ressort en position d'attente exerce une force de déclenchement supérieure ou égale à 10 N sur le corps de fermeture.

2. Soupape de sûreté selon la revendication 1, **caractérisée en ce que** l'élément de ressort en position d'attente exerce une force de déclenchement supérieure ou égale à 20 N sur le corps de fermeture.

3. Soupape de sûreté selon l'une quelconque des revendications précédentes, **caractérisée en ce que** l'élément de ressort (102 ; 202 ; 302 ; 402 ; 502) est en appui d'une part contre le corps de fermeture (101 ; 201 ; 301 ; 401 ; 501), d'autre part contre un .boîtier de soupape comprenant le canal de transfert (1) et le canal d'évacuation (2), l'appui contre le boîtier de soupape étant configuré sans encastrement.

4. Soupape de sûreté selon l'une quelconque des revendications précédentes, **caractérisée en ce que** l'élément de ressort est un ressort hélicoïdal (102) reposant d'une part sur le corps de fermeture (101) et d'autre part sur une partie d'un boîtier de soupape présentant le canal de transfert (1) et le canal d'évacuation (2).

5. Soupape de sûreté selon l'une quelconque des revendications 1 à 3, **caractérisée en ce que** l'élément de ressort est au moins une rondelle-ressort (202 ; 302 ; 402 ; 502) reposant d'une part sur le corps de fermeture (201 ; 301 ; 401 ; 501) et d'autre part sur une partie d'un boîtier de soupape présentant le canal de transfert (1) et le canal d'évacuation (2).

6. Soupape de sûreté selon l'une quelconque des revendications précédentes, **caractérisée en ce que** l'élément étanche (5) est un joint torique reposant sur le corps de fermeture, rendant étanche le canal de transfert (1) en position d'attente.

7. Soupape de sûreté selon l'une quelconque des revendications précédentes, **caractérisée en ce que** le corps d'éclatement (3) est une ampoule de verre remplie de liquide, encastrée axialement entre le corps de fermeture et le contre-appui (4).
